Europäisches Patentamt

European Patent Office

Office européen des brevets

(19)

(11) Publication number: **0 296 478 B1**

# EUROPEAN PATENT SPECIFICATION

(12)

(45) Date of publication of patent specification: **04.09.91**    (51) Int. Cl.⁵: **A47J 31/40**

(21) Application number: **88109542.6**

(22) Date of filing: **15.06.88**

(54) **Automatic machine for the preparation of coffee or the like.**

(30) Priority: **23.06.87 IT 4572887**

(43) Date of publication of application:
**28.12.88 Bulletin 88/52**

(45) Publication of the grant of the patent:
**04.09.91 Bulletin 91/36**

(84) Designated Contracting States:
**AT BE CH DE ES FR GB IT LI NL SE**

(56) References cited:
**DE-A- 2 432 141        GB-A- 2 178 645**
**US-A- 2 907 266        US-A- 3 369 478**
**US-A- 3 552 976        US-A- 3 683 790**

(73) Proprietor: **ZANUSSI GRANDI IMPIANTI S.p.A.**
**Viale Treviso 15**
**I-33170 Pordenone(IT)**

(72) Inventor: **Garulli, Augusto**
**Via Angelo Maj 10/I**
**I-24100 Bergamo(IT)**
Inventor: **Donizetti, Gaetano**
**Via Baioni 31/C**
**I-24100 Bergamo(IT)**
Inventor: **Bandelli, Mauro**
**Via Cesare Battisti 26**
**I-24035 Curno (Bergamo)(IT)**

(74) Representative: **Patentanwälte Grünecker,**
**Kinkeldey, Stockmair & Partner**
**Maximilianstrasse 58**
**W-8000 München 22(DE)**

## Description

The present invention relates to an automatic machine for the preparation of coffee or the like, according to the introductory part of claim 1.

US-A-3 552 976 describes a method for brewing beverage from hot water and ground beverage material. This machine comprises an infusion chamber having its bottom provided with a suitable filter point, the bottom of the infusion chamber is sealingly connected to a cylinder disposed therebelow and containing a slidably displaceable piston.

When the piston is operated to be displaced towards the bottom of the infusion chamber it causes the above noted immision of air into the chamber to take place through the filter, while downwards displacement of the piston causes the beverage to be extracted through the filter by the action of vacuum. Although this solution appears advantageous, permitting as it does the speedy preparation of coffee having particularly appreciable flavour characteristics, it still presents certain shortcomings. In particular, the coffee extracted from the infusion chamber has to be transferred to the dispensing zone by the action of gravity, because the slidable piston does not subject it to any positive pressure. This imposes certain restrictions on the machine with regard to the positioning of its various components relative to one another, because the entire infusion assembly has to be located at a higher level than the dispensing zone, the latter having to be disposed at a certain minimum height above a support surface for practical and stadardization reasons. In the absence of complicated and uneconomic auxiliary equipment, this determines of course also the positioning of other basic components of the machine, such as the means for storing the ground coffee and feeding it to the infusion chamber (and optionally an attachment for grinding the coffee), and the means for supplying and/or heating the water. As a result, this coffee-making machine has undesirably great dimensions and/or an unsatisfactory construction as regards the positioning of its various components relative to one another.

US-A-3 683 790 describes a machine comprising means for recirculating brewed beverage or delivering it to a dispensing station. This is achieved by a suction pump disposed below the outlet of the brewing receptacle. The shortcomings of this method are complicated arrangements for actuating and controlling the section intake and the pressure output.

It is an object of the invention to provide a machine of the above kind, which dispenses the beverage with a sufficient pressure without the necessity of employing complicated expensive and/or insufficiently reliable auxiliary devices.

This object is solved by the features of claim 1.

Advantageous further embodiments are specified in the subclaims.

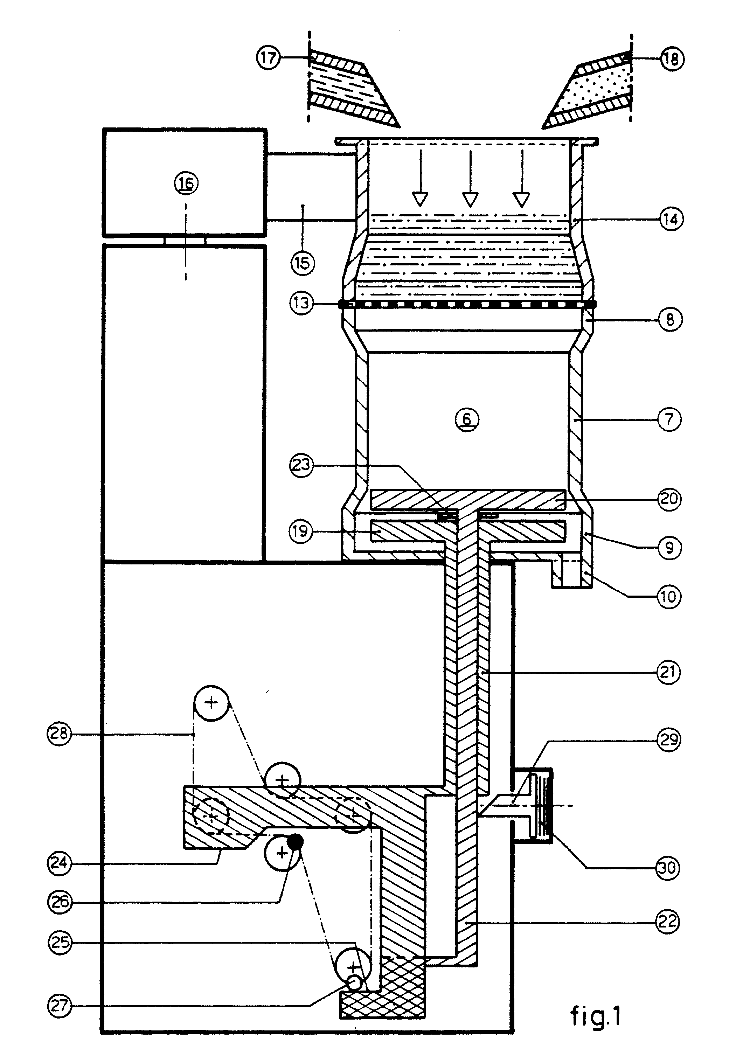

The characteristics and advantages of the invention will become more clearly evident from the following description, given by way of example with reference to the accompanying drawings, wherein figs. 1 to 5 show diagrammatic crosssectional views of the main components of the machine in successive operating positions, according to a preferred embodiment of the invention.

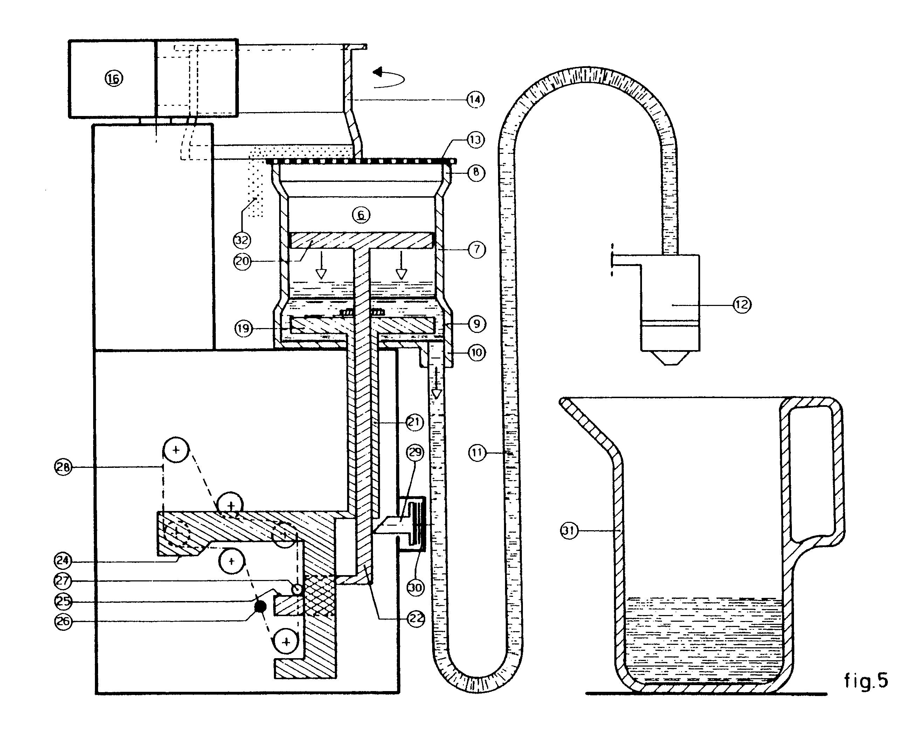

A main component of the machine is a fixed chamber 6, preferably of circular cross-section, having an inter-mediate portion 7 of smaller diameter, and upper and lower portions 8 and 9 of greater diameter. Adjacent its bottom chamber 6 has an opening 10 communicating with at least one dispensing outlet 12 through a conduit 11 (fig.5). Outlet 12 may be disposed at the most suitable location of the machine, preferably at a sufficiently high level for ensuring effortless operation in use of the machine.

The upper end of chamber 6 is closed by a filter surface 13 which may comprise a metal filter material and/or a progressive-feed filter paper strip as described in US-A-3,565,641.

As will be explained as the description proceeds, chamber 6 is adapted during certain phases of the operating cycle of the machine to be brought into sealed communication, by way of filter surface 13, with a receptacle 14 of substantially cylindrical shape disposed thereabove and having an open top.

An arm 15 carrying receptacle 14 is connected to a motorized operating mechanism 16 operably in a per se known manner to arcuately displace receptacle 14 away from chamber 6 and filter surface 13 (fig. 5).

When receptacle 14 is in the position shown in figs. 1 to 4, it is located below two dispensing devices 17 and 18 (fig. 1) adapted respectively to feed metered quantities of hot water and a base material of the beverage to be prepared, for instance coffee, to receptacle 14. In the latter case it is understood that dispensing device 18 is preferably connected to a supply container (not shown for simplicity) containing freshly ground coffe.

Surface 13 is permeable to liquids and impermeable to the base material of the beverage, and under the operating conditions of figs. 1 to 4 acts as the bottom of an infusion chamber defined by receptacle 14 and communicating with atmosphere.

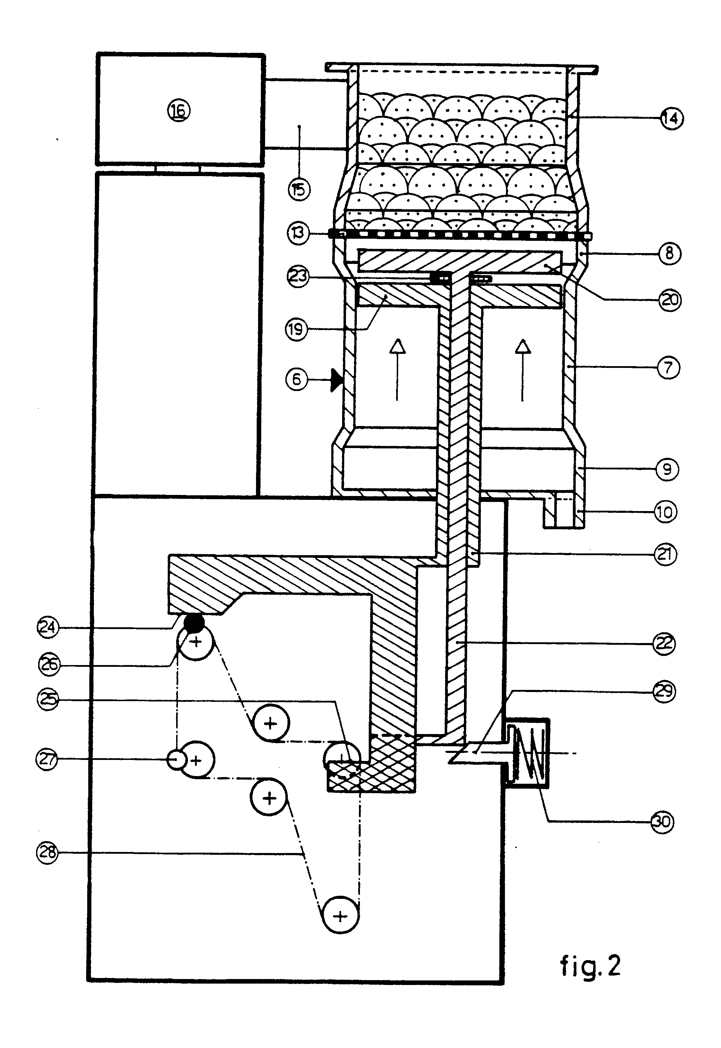

Mounted in cylindrical chamber 6, to be referred to as "extraction chamber" in the following, are a first and a second piston 19 and 20 in coaxial alignment above one another for axial displacement independent of each other, with their circumferential surfaces adapted to by brought into substantially sealing contact with the interior wall surface of intermediate portion 7 of chamber 6. The height and the stroke of pistons 19 and 20 are selected so that they are displaceable along chamber 6 between two end positions: a rest position (fig. 1) in which the lower piston 19 is located within the enlarged lower portion 9 of chamber 6, while the upper piston 20 still cooperates with intermediate portion 7, and an operating position (fig. 2), in which upper piston 20 is located within upper enlarged portion 8 of chamber 6, and lower piston 19 cooperates with intermediate portion 7. Each piston 19, 20 has a respective piston rod 21, 22. In particular, piston rod 22 is freely and sealingly slidable within piston rod 21. To this purpose the top surface of piston 19 may be provided with an annular gasket 23 for forming a seal around piston rod 22.

The ends of pistons rods 21, 22 opposite pistons 19 and 20, respectively, carry respective catch links or the like disposed side by side and formed with respective catch surfaces 24 and 25 as shown in figs. 1 to 5. Catch surfaces 24, 25 are adapted to cooperate with a first and a second catch pin 26, 27, respectively, having different lenghts and secured to a driving chain 28 or the like.

By means of a number of deflecting sprockets driving chain 28 is guided along a curvilinear path in a closed loop as shown in the figures, and motor-driven in synchronism with operating mechanism 16.

The motor-driven operating mechanisms of arm 15 and chain 28 as well as the synchronizing means are of a per se known type and therefore not shown for simplicity.

The machine is additionally provided with a resilient stop means comprising for example an inclined cam surface 29 associated to a compression spring 30 and adapted to cooperate with rod 22 of piston 20.

The location of cam surface 29 and the strength of spring 30 are obviously determined by the arrangement and dimensions of the associated components.

In operation, at the start of each operating cycle the machine is in the state shown in fig. 1, the infusion chamber 14 being at least partially filled with a mixture of hot water and a beverage base material, for instance coffee, supplied thereto in metered quantities by dispensing devices 17 and 18. The metered amount of the mixture may of course be varied in accordance with the actual demand, to fill for instance a single cup or a plurality of cups.

Driving chain 28 is then driven to advance clockwise, so that the upwards travelling catch pin 26 engages catch surface 24, resulting in upwards displacement of piston 19, and as a result of piston 20, in chamber 6 (fig. 2). This upward displacement of pistons 19 and 20 causes air to be forced into infusion chamber 14 through filter surface 13, resulting in a desirable agitation of the mixture of water and coffee in a known manner. As the pistons arrive at their upper end position (fig. 2), resilient stop 29, 30 shifts to its extended position in which it cooperates with the lower end of piston rod 22 to thereby retain piston 20 in its upper end position. Pistons 19 and 20 then remain stationary for a predetermined infusion interval, depending on the speed of driving chain 28 and on the geometric configuration of the latter and of catch surface 24, from which catch pin 26 is disengaged during this interval.

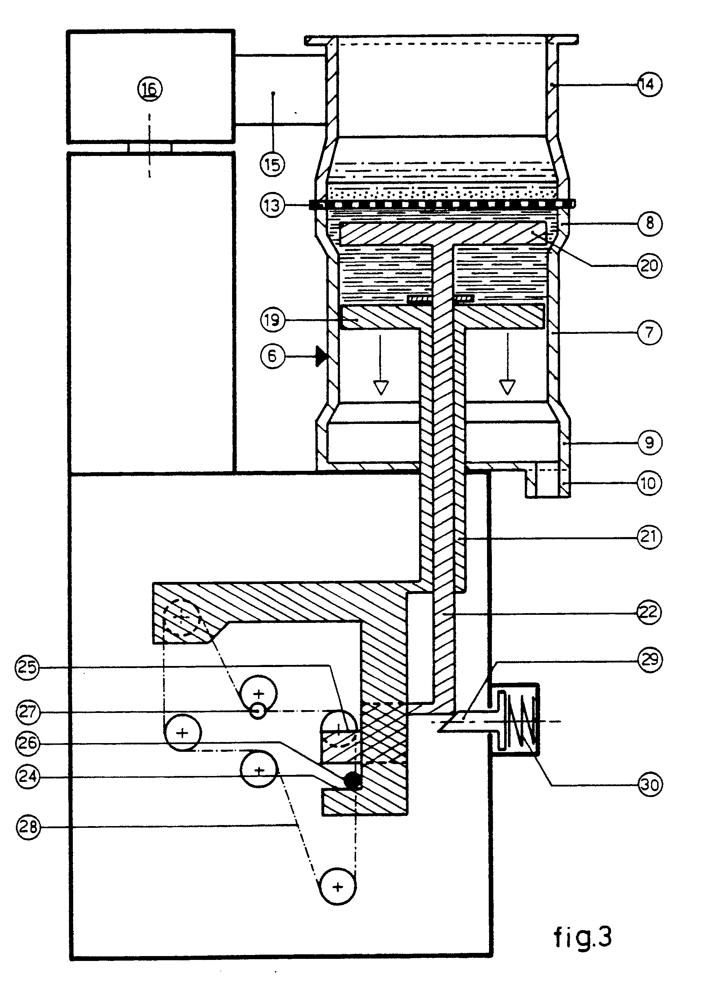

At the end of the infusion interval, catch surface 24 is again engaged by catch pin 26 as it travels downwards, causing piston 19 to be displaced downwards (fig. 3). At this time upper piston 20 is retained in its upper end position by resilient stop 29, 30. The coffe infusion extracted fron infusion chamber 14 through filter surface 13 by the vacuum created by the downward displacement of lower piston 19 flows into extraction chamber 6 through the gap formed between upper piston 20 and upper enlarged portion 8 of chamber 6.

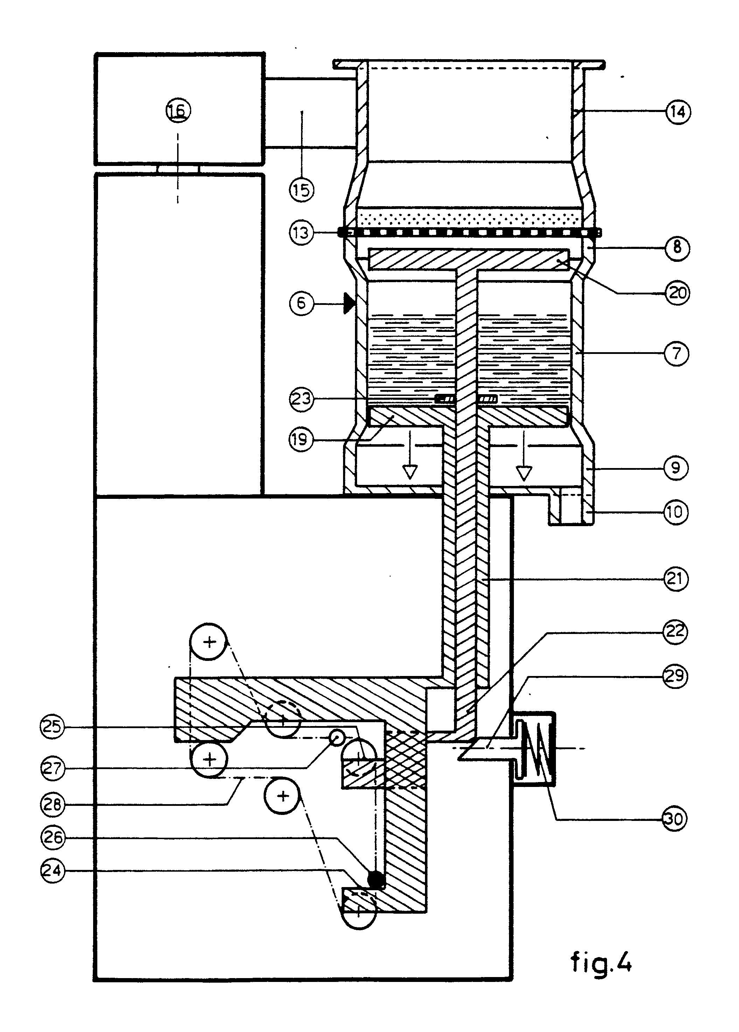

When lower piston 19 arrives at its lower end position within lower enlarged portion 9 of extraction chamber 6, catch pin 26 is disengaged from catch surface 24. Towards the end of the downward stroke of lower piston 19, after substantially all of the coffee infusion has been extracted from infusion chamber 14 into extraction chamber 6, catch pin 27 of driving chain 28 comes into engagement with catch surface 25 associated to upper piston 20 (fig. 4), causing piston rod 22 and thus piston 20 to be subsequently displaced downwards after overcoming the retaining force of resilient stop 29, 30.

As shown more clearly in fig. 5, resilient stop 29, 30 is cammed to its retracted position while upper piston 20 is being displaced downwards to thereby exert a downwards directed pressure on the beverage contained therebelow in extraction chamber 6. This pressure causes the beverage to pass through the gap formed between lower piston 19 and lower enlarged portion 9 of extraction chamber 6, and to flow through opening 10 and duct 11 towards dispensing outlet 12.

This operational characteristic advantageously permits the dispensing outlet to be disposed at practically any location on the machine to thereby allow a suitable receptacle 31 to be placed therebelow, irrespective of the arrangement of the infusion and extraction chambers, which may be disposed above one another. It is thus possible, as has been stated as an object of the invention, to provide a machine for the preparation of coffee or the like, in which the positioning of the various components relative to one another can be readily optimized while retaining the functional advantages and structural simplicity of prior art embodiments.

At the same time as the coffee is being dispensed (fig.5), or subsequent thereto, operating mechanism 15, 16 is actuated to withdraw receptacle 14 from filter surface 13 (which is thereby automatically cleaned) and from extraction chamber 6 for discharging the coffee-grounds in a per se known manner at a suitable discharge station (not shown).

At the end of the coffee dispensing step pistons 19 and 20 are again disposed at their lower end positions, and receptacle 14 is reconnected to extraction chamber 6 (fig. 1), so that the machine is ready for initiating a new beverage preparation and dispensing cycle.

The machine described in the preceding as a preferred embodiment may of course undergo numerous modifications within the scope of the invention, and may also be used for the preparation of other beverages, for instance tea, with tea leaves as the base material.

## Claims

1. An automatic machine for the preparation of coffee or the like, comprising an infusion chamber (14) communicating with atmosphere and adapted to receive a mixture of hot water and a base material for the beverage, said infusion chamber being provided at its bottom with a surface (13) which is permeable to fluids and impermeable to said base material, and through which said infusion chamber (14) is adapted to be in sealed communication with an extraction chamber (6) with a dispensing outlet (10) in its bottom and is provided with operating means (19) operable to force air into said infusion chamber (14) and to subsequently extract the beverage from said infusion chamber (14) through said surface (13), **characterized in that,** it further comprises a piston (20) slidably guided in said extraction chamber (6) and adapted to be positioned at an upper position adjacent to said surface (13) when said operating means (19) is actuated to extract the beverage from said infusion chamber (14), and to be subsequently displaced towards the bottom of said extraction chamber (6) to thereby exert on said extracted beverage a pressure directed towards said dispensing location (12) said extraction chamber comprising an intermediate portion (7) of reduced internal cross-section substantially engaging the circumferential surface of said piston (20), and an upper portion (8) of enlarged internal cross-section in which said piston is adapted to be disposed when said operating means (19) is actuated for extracting the beverage from said infusion chamber.

2. A machine according to claim 1, **characterized in that,** said operating means (19) comprises a further piston slidably guided in said extraction chamber (6), said piston (20) is coaxial with said further piston (19) and disposed thereabove, and displaceable relative thereto within said extraction chamber (6) in a substantially independent manner.

3. A machine according to claims 1 or 2, **characterized in that,** said extraction chamber (6) comprises a lower portion (9) having a larger internal cross-section than said intermediate portion (7) and in which said further piston (19) is adapted to be disposed when said piston (20) is actuated to exert pressure on the extracted beverage in the direction towards said dispensing location (12).

4. A machine according to at least one of claims 1-3, **characterized by,** the provision of a motor-driven mechanism (24-30) for the synchronized actuation of said pistons (19,20).

5. A machine according to at least one of claims 1-4, **characterized in that,** said actuating mechanism comprises catch surfaces (24,25) fixedly connected to respective ones of said pistons (19,20) and adapted to be engaged by catch pins (26,27) of a motor-driven chain (28) of curvilinear configuration.

## Revendications

1. Machine automatique pour préparer du café ou une boisson analogue, comprenant une chambre d'infusion (14) communiquant avec l'atmosphère et adaptée pour recevoir un mélange d'eau chaude et d'un produit de base pour la boisson, cette chambre d'infusion comportant, au niveau de son fond, une surface (13) perméable aux liquides et imperméable au produit de base et grâce à laquelle la chambre d'infusion (14) est adaptée pour communiquer de façon étanche avec une chambre d'extraction (6) avec une sortie de distribution (10) dans son fond et avec des moyens fonctionnels (19) pouvant être actionnés pour refouler de l'air dans la chambre d'infusion (14) et pour extraire ensuite la boisson de la chambre d'infusion (14) à travers cette surface (13), caractérisée en ce qu'elle comprend en outre un piston (20)guidé en coulissement dans la chambre d'extraction (6) et adapté pour être positionné dans une position haute adjacente à la surface (13) lorsque les moyens d'actionnement (19) sont actionnés pour extraire la boisson de la chambre d'infusion (14) et pour être ensuite déplacé en direction du fond de la chambre d'extraction (6) afin d'exercer ainsi sur la boisson extraite une pression dirigée vers l'emplacement de distribution (12), cette chambre d'extraction comprenant une portion intermédiaire (7) de section transversale intérieure réduite coopérant pratiquement avec la surface circonférentielle du piston (20), et une portion supérieure (8) de section transversale interne plus grande dans laquelle le piston est adapté pour être placé lorsque les moyens d'actionnement (19) sont actionnés pour extraire la boisson de la chambre d'infusion.

2. Machine selon la revendication 1, caractérisée en ce que les moyens fonctionnels (19) comportent un autre piston guidé à coulissement dans la chambre d'extraction (6), le piston (20) est coaxial à cet autre piston (19) et est disposé au-dessus de lui, les deux pistons pouvant être déplacés l'un par rapport à l'autre à l'intérieur de la chambre d'extraction (6) d'une manière pratiquement indépendante.

3. Machine selon la revendication 1 ou la revendication 2, caractérisée en ce que la chambre d'extraction (6) comporte une portion inférieure (9) ayant une section transversale interne plus grande que la portion intermédiaire (7) et dans laquelle cet autre piston (19) est adapté pour être disposé lorsque le piston (20) est actionné pour exercer une pression sur la boisson extraite en direction de l'emplacement de distribution (12).

4. Machine selon au moins l'une des revendications 1 à 3, caractérisée en ce qu'un mécanisme entraîné par un moteur (24-30) est prévu pour l'actionnement synchronisé des pistons (19,20).

5. Machine selon l'une au moins des revendications 1 à 4, caractérisée en ce que ce mécanisme d'actionnement comporte des surfaces de préhension (24,25) solidarisées des pistons (19,20) respectifs et adaptées pour coopérer avec des broches de préhension (26,27)d'une chaîne entraînée par moteur (28) se déplaçant selon un trajet curviligne.

**Patentansprüche**

1. Automatische Maschine für die Zubereitung von Kaffee od. dgl., enthaltend eine Aufgußkammer (14), die mit der Atmosphäre in Verbindung steht und dazu eingerichtet ist, ein Gemisch aus heißem Wasser und einer Grundsubstanz für das Getränk aufzunehmen, und die an ihrem Boden mit einer Fläche (14) versehen ist, die für Flüssigkeiten durchlässig und für die Grundsubstanz undurchlässig ist und durch die hindurch die Aufgußkammer (14) geeignet ist, in abgedichteter Verbindung mit einer Extraktionskammer (6) gebracht zu werden, die mit einem Abgabeauslaß (10) an ihrem Boden und mit Betätigungseinrichtungen (19) versehen ist, die dazu betreibbar sind, Luft in die Aufgußkammer (14) zu drücken und anschließend das Getränk aus der Aufgußkammer (14) durch die genannte Fläche (13) hindurch zu extrahieren, **dadurch gekennzeichnet,** daß sie weiterhin einen Kolben (20) enthält, der verschiebbar in der Extraktionskammer (6) geführt und dazu eingerichtet ist, in eine obere Stellung benachbart der genannten Fläche (13) gebracht zu werden, wenn die Betätigungseinrichtung (19) dazu betätigt wird, daß Getränk aus der Aufgußkammer (14) zu extrahieren, und anschließend gegen den Boden der Extraktionskammer (6) verschoben zu werden, um dadurch auf das extrahierte Getränk einen Druck auszuüben, der gegen die Abgabestelle (12) gerichtet ist, wobei die Extraktionskammer einen Zwischenabschnitt (7) verminderten Innenquerschnitts, der im wesentlichen an der Umfangsfläche des genannten Kolbens (20) anliegt, und einen oberen Abschnitt (8) vergrößerten Innenquerschnitts aufweist, in den der Kolben verschoben werden kann, wenn die Betätigungseinrichtung (19) zur Extrahierung des Getränks aus der Aufgußkammer betätigt wird.

2. Maschine nach Anspruch 1, **dadurch gekennzeichnet,** daß die Betätigungseinrichtung (19) einen weiteren Kolben enthält, der verschiebbar in der Extraktionskammer (6) geführt ist, wobei der genannte Kolben (20) koaxial zu dem genannten weiteren Kolben (19) und über diesem angeordnet ist und relativ zu diesem innerhalb der Extraktionskammer (6) in einer im wesentlichen unabhängigen Weise verstellbar ist.

3. Maschine nach den Ansprüchen 1 oder 2, **da-durch gekennzeichnet,** daß die Extraktions-kammer (6) einen unteren Abschnitt (9) aufweist, der einen größeren Innenquerschnitt hat, als der Zwischenabschnitt (7) und in den der weitere Kolben (19) gebracht werden kann, wenn der Kolben (20) dazu betätigt wird, einen Druck auf das extrahierte Getränk in Richtung gegen die Abgabestelle (12) auszuüben.

4. Maschine nach wenigstens einem der Ansprüche 1 bis 3, **gekennzeichnet** durch einen motorgetriebenen Mechanismus (24-30) für die synchronisierte Betätigung der Kolben (19, 20).

5. Maschine nach wenigstens einem der Ansprüche 1 bis 4, **dadurch gekennzeichnet,** daß der Betätigungsmechanismus Mitnehmerflächen (24, 25) enthält, die fest mit jeweils einem der Kolben (19, 20) verbunden sind und dazu eingerichtet sind, von Mitnehmerstiften (26, 27) einer motorgetriebenen Kette (28) ergriffen zu werden, die einen abgewinkelten Weg beschreibt.

fig.1

fig. 2

fig.3

fig.4

fig.5